# EUROPEAN PATENT SPECIFICATION

(11) **EP 2 366 093 B1**
(45) Date of publication and mention of the grant of the patent: **31.12.2014**
(21) Application number: 09753099.2
(22) Date of filing: 13.11.2009
(51) Int. Cl.: G01B 11/06

(54) **METHOD, MEASURING ARRANGEMENT AND APPARATUS FOR OPTICALLY MEASURING BY INTERFEROMETRY THE THICKNESS OF AN OBJECT**
VERFAHREN, MESSANORNDUNG UND VORRICHTUNG ZUM OPTISCHEN MESSEN DER DICKE EINES OBJEKTS DURCH INTERFERROMETRIE
PROCÉDÉ, DISPOSITIF ET APPAREIL DE MESURE POUR MESURER OPTIQUEMENT PAR INTERFÉROMÉTRIE L'ÉPAISSEUR D'UN OBJET

(30) Priority: 17.11.2008 IT BO20080694
(43) Date of publication of application: 21.09.2011
(73) Proprietor: Marposs Societa' Per Azioni, 40010 Bentivoglio (BO) (IT)
(72) Inventor: ZIPRANI, Francesco, I-50126 Firenze (IT)
(86) International application number: PCT/EP2009/065172
(87) International publication number: WO 2010/055144

(56) References cited:
- WO-A2-2005/017489
- DE-A1-102006 016 131
- US-A- 5 648 849
- US-A1- 2008 151 253

## Description

### Technical field

The present invention relates to a method, a measuring arrangement and an apparatus for optically measuring by interferometry the thickness of an object.

The present invention can be advantageously applied for optically measuring by interferometry the thickness of slices, or wafers, of semiconductor material (typically, but not necessarily, silicon), to which reference will be explicitly made in the specification without loss of generality.

### Background art

A slice of semiconductor material is machined, for example, to obtain integrated circuits or other electronic components in the semiconductor material. In particular, when the slice of semiconductor material is very thin, the slice of semiconductor material is placed on a support layer (typically made of plastic or glass) which provides a higher mechanical sturdiness, and thus an ease in handling. Generally, it is necessary to mechanically machine the slice of semiconductor material by grinding and polishing for obtaining a thickness condition that is regular and corresponds to a desired value. In the course of this mechanical machining phase of the slice of semiconductor material it is necessary to measure or keep under control the thickness so to obtain the desired value.

A known arrangement for measuring the thickness of a slice of semiconductor material employs gauging heads that have mechanical feelers touching an upper surface of the slice of semiconductor material being machined. This measuring technology may affect the slice of semiconductor material during the measuring operation owing to the mechanical contact with the mechanical feelers, and it doesn't allow to measure very small thickness values (typically smaller than 100 microns).

Other and different arrangements are known for measuring the thickness of a slice of semiconductor material such as capacitive probes, inductive probes (of the eddy-current type or other types), or ultrasound probes. These measuring technologies are of the contactless type, they do not affect the slice of semiconductor material in the course of the measuring and may measure the thickness of the slice of semiconductor material without the necessity of removing the support layer. However, some of these measuring technologies may offer a limited range of measurable dimensions, since typically thickness values being smaller than 100 microns may not be measured.

Optical probes, in some cases associated with interferometric measures, are used for overcoming the limits of the above described measuring technologies. For instance, US patent US-A1-6437868 and the published Japanese patent application JP-A-08-216016 describe apparatuses for optically measuring the thickness of a slice of semiconductor material. Some of the known apparatuses include an infrared radiation source, a spectrometer, and an optical probe, which is connected to the infrared radiation source and to the spectrometer by means of optical fibers, it is placed in such a way to face the slice of semiconductor material to be measured, and it carries lenses for focusing the radiations on the slice of semiconductor material to be measured. The infrared radiation source emits a beam of infrared radiations for instance with a useful wavelength bandwidth located about 1300 nm, so constituting a low coherence beam. Low coherence opposes to monofrequency (single frequency being constant in time), being representative of the availability of a number of frequencies depending on the emissive principle implemented in the radiation source. Infrared radiations are employed since the currently used semiconductor materials are primarily made of silicon which is sufficiently transparent to the infrared radiations. In some of the known apparatuses, the infrared radiation source is composed of a SLED (Superluminescent Light Emitting Diode) which can emit a beam of infrared radiations having a bandwidth with an order of magnitude of about 50 nm around the central value.

However, even by using optical probes associated to interferometric measures of the above mentioned type, objects having thickness smaller than about 10 microns cannot be measured or checked - in the course of the mechanical machining phase thereof - with acceptable reliability, whereas the semiconductor industry is now requiring to measure thickness values of few or very few microns and to carry out the checking in the workshop environment and within the very limited time allowed by the machining cycles.

### Disclosure of the invention

The purpose of the present invention is to provide a method, a measuring arrangement and an apparatus for optically measuring by interferometry the thickness of an object which overcome the above described inconveniences, and can be concurrently easily and cheaply implemented.

The purpose is reached by a method, a measuring arrangement and an apparatus for optically measuring by interferometry the thickness of an object according to what is claimed in the accompanying claims.

### Brief Description of the Drawings

The present invention is now described with reference to the enclosed sheets of drawings, given by way of non limiting example, wherein:
- figure 1 is a simplified view, with some parts removed for the sake of clarity, of an apparatus according to the present invention for optically measuring by interferometry the thickness of a slice of semiconductor material;
- figure 2 is a simplified cross-sectional side view of the slice of semiconductor material while the thickness of which is measured;
- figure 3 is a simplified view, with some parts removed for the sake of clarity, of an infrared radiation source of the apparatus of figure 1;
- figure 4 is a simplified view, with some parts removed for the sake of clarity, of a measuring arrangement according to the present invention for optically measuring by interferometry the thickness of a slice of semiconductor material;
- figure 5 is a graph in connection with radiation absorption in a silicon slice;
- figure 6 is a simplified view, with some parts removed for the sake of clarity, of a measuring arrangement according to a different embodiment of the present invention for optically measuring by interferometry the thickness of a slice of semiconductor material; and
- figure 7 is a simplified view, with some parts removed for the sake of clarity, of a further measuring arrangement according to the present invention for optically measuring by interferometry the thickness of a slice of semiconductor material.

### Best mode for carrying out the invention

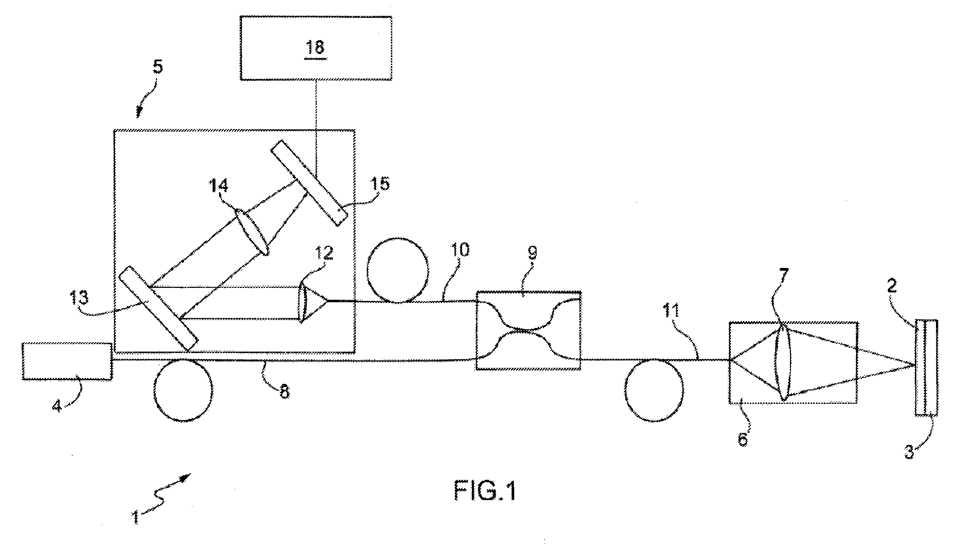

In figure 1, the reference number **1** indicates, on the whole, a measuring arrangement, more specifically an apparatus for optically measuring by interferometry the thickness of an object **2** formed by a slice of semiconductor material. It is to be noted herein and will be further explicated that the slice **2** is as well representative of a single layer and of a multiplicity of layers according to the various design requirements of the slice of semiconductor material.

According to the embodiment illustrated in figure 1 including per se known features, the slice **2** of semiconductor material is placed on a support layer **3** (typically made of plastic or glass) which provides for a higher mechanical sturdiness and ease in handling. According to a different embodiment, herein not illustrated, the support layer **3** is omitted.

The apparatus **1** includes an infrared radiation source **4,** a spectrometer **5,** and an optical probe **6** which is connected by means of optical fiber lines to the infrared radiation source **4** and to the spectrometer **5,** it is arranged in such a way to face the slice **2** of semiconductor material to be measured, and it carries lenses **7** for focusing the radiations on the slice **2** of semiconductor material to be measured. Typically, the optical probe **6** is arranged in such a way to be perpendicular, as shown in figure 1, or slightly angled with respect to the external surface of the slice **2** of semiconductor material to be measured, the optical probe **6** being set apart from the latter by air or liquid or any other appropriate transmissive means, through which the infrared radiations propagate.

According to the embodiment shown in figure 1, there is a first optical fiber line **8** connecting the radiation source **4** to an optical coupler **9,** a second optical fiber line **10** connecting the optical coupler **9** to the spectrometer **5,** and a third optical fiber line **11** connecting the optical coupler **9** to the optical probe **6**. The first **8,** second **10** and third **11** optical fiber lines can end up at a circulator, which is per se known and thus not illustrated in figure 1, or at another device serving as the coupler **9**. According to the embodiment illustrated in figure 1, the spectrometer **5** includes at least a lens **12** collimating the radiations received through the second optical fiber line **10** on a diffractor **13** (such as a grating or any other functionally equivalent device), and at least a further lens **14** focusing the radiations reflected by the diffractor **13** on a radiation detector **15** (typically formed by an array of photosensitive elements, for example an InGaAs sensor). The infrared radiation source **4** emits a low coherence beam of infrared radiations, which means that it is not monofrequency (a single frequency being constant in time), but it is composed of a number of frequencies.

Infrared radiations are employed in a preferred embodiment as the currently used semiconductor materials are primarily made of silicon, and silicon is sufficiently transparent to the infrared radiations.

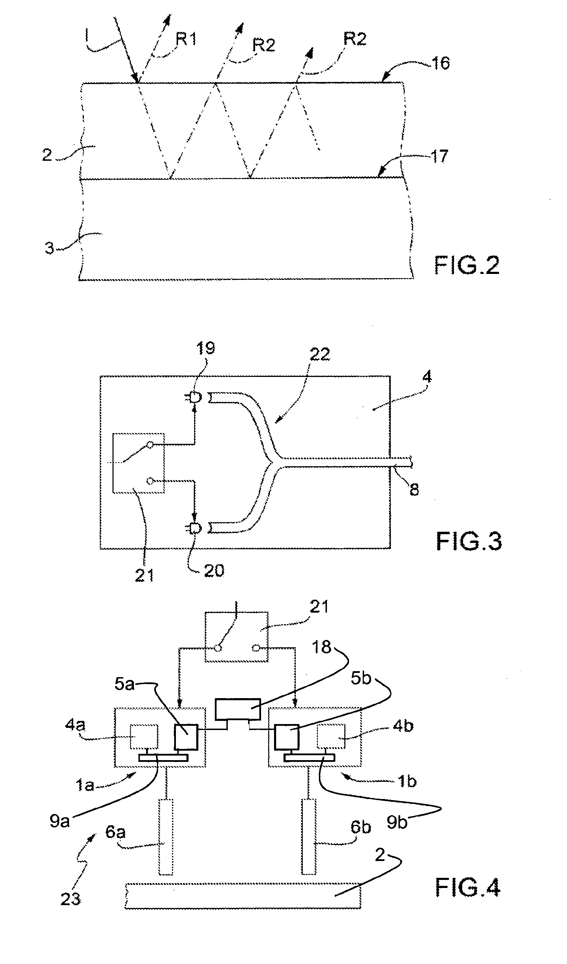

According to what is illustrated in figure 2 and is generally known, the optical probe **6** emits a beam of infrared radiations **I** directed onto the slice **2** of semiconductor material to be measured. Quotas of such radiations **I** (reflected radiations **R1**) are reflected back into the optical probe **6** by an external surface **16** without entering the slice **2** of semiconductor material. Other quotas of the infrared radiations **I** (reflected radiations **R2**) enter the slice **2** of semiconductor material and are reflected back into the optical probe **6** by an internal surface **17** opposite with respect to the external surface **16.** It should be noted that, for the sake of understanding, in figure 2 the incident radiations **I** and the reflected radiations **R** are represented forming an angle other than 90° with respect to the attitude of the slice **2** of semiconductor material. In reality, as stated hereinbefore, these radiations - more specifically their propagation - can be perpendicular or substantially perpendicular to the attitude of the slice **2** of semiconductor material.

The optical probe **6** catches both the radiations **R1** that have been reflected by the external surface **16** without entering the slice **2** of semiconductor material, and the radiations **R2** that have been reflected by the internal surface **17** entering the slice **2** of semiconductor material. As shown in figure 2, the radiations **R2,** that have been reflected by the internal surface **17** entering the slice **2** of semiconductor material, can leave the slice **2** of semiconductor material after just one reflection on the internal surface **17,** after two subsequent reflections on the internal surface **17,** or more generally, after a number N of subsequent reflections on the internal surface **17.** Obviously, upon each reflection a quota of the radiations **R2** leaves the slice **2** of semiconductor material through the external surface **16** until the residual intensity of the radiations **R2** is almost null. It is to be noted that, by the same physics, energetic quotas may be lost as they are carried by radiations leaving the slice **2** of semiconductor material through the surface **17** into the support layer **3**. As previously stated, the beam of infrared radiations is composed of radiations having different frequencies (that is, having different wavelengths).

Given a nominal value for the thickness of the slice **2** of semiconductor material to be checked, the radiation frequencies available in the radiation source **4** are chosen so that there is certainly a radiation the wavelength thereof is such that twice the optical thickness of the slice **2** is equal to an integer multiple of the wavelength itself. The optical thickness is to be intended as the length of the transversal path of the radiation through the slice **2.** As a consequence, this radiation when reflected by the internal surface **17,** leaves the slice **2** of semiconductor material in phase with the radiation of the same wavelength reflected by the external surface **16,** and is added to the latter so determining a maximum of interference (constructive interference). On the contrary, a radiation which has a wavelength being such that twice the optical thickness of the slice **2** of semiconductor material to be checked is equal to an odd multiple of the half-wavelength, when reflected by the internal surface **17** leaves the slice **2** of semiconductor material in antiphase with the radiation of the same wavelength reflected by the external surface **16,** and is added to the latter so determining a minimum of interference (destructive interference).

The result of the interference between reflected radiations **R1** and **R2** is caught by the optical probe **6** and is conveyed to the spectrometer **5.** The spectrum which is detected by the spectrometer **5** for each frequency (that is, for each wavelength) has a different intensity determined by the alternation of constructive and destructive interferences.

A processing unit **18** receives information representative of the spectrum from the spectrometer **5** and analyses it by means of some mathematical operations, per se known. In particular, by performing the Fourier analysis of the spectral information received from the spectrometer **5** and by knowing the refractive index of the semiconductor material, the processing unit **18** can determine the thickness of the slice **2** of semiconductor material.

Going into more details, in the processing unit **18** the received spectral information (as a function of the wavelength) can be mapped onto a periodic function and suitably processed, in a per se known way, as a periodic function which can be mathematically expressed by means of a Fourier series modeling. The characteristic interference pattern of the reflected radiations **R1** and **R2** expands as a sinusoidal function (wherein there is an alternation of constructive and destructive interference phenomena); the frequency of this sinusoidal function is proportional to the length of the optical thickness of the slice **2** of semiconductor material through which the radiation propagates. Eventually, by taking the Fourier transform of the aforementioned sinusoidal function, the value of the optical path through the slice **2** of semiconductor material and thus the optical thickness of the slice **2** of semiconductor material (corresponding to half the optical path) can be determined. The actual thickness of the slice **2** of semiconductor material can be easily obtained by dividing the optical thickness of the slice **2** of semiconductor material by the refractive index of the semiconductor material of the slice **2** (for example, the silicon refractive index amounts to about 3.5).

As hereinbefore described, the optical path (and thus the thickness) is determined on the basis of the frequency of the sinusoidal function. It can be shown by the application of known physical laws that the lower limit of the thickness value which can be directly measured is inversely proportional to the size of the continuous interval of wave numbers made available in the band of the used radiations, being the wave number the reciprocal of the wavelength.

According to what is illustrated in figure 3, the radiation source **4** includes an emitter **19** emitting a first low coherence radiation beam composed of a number of wavelengths within a first band, an emitter **20** emitting a second low coherence beam of radiations composed of a number of wavelengths within a second band differing from the first band, and a commutator **21** which alternatively enables to employ the emitter **19** or the emitter **20** as depending on the thickness of the slice **2** of semiconductor material. According to a preferred embodiment, the radiation source **4** includes an optical conveyor **22** comprising optical fibers which ends into the first optical fiber line **8** and is adapted to convey the radiation beams emitted by the two emitters **19** and **20** towards the first optical fiber line **8.** For example, the optical conveyor **22** can be implemented by means of one or more couplers or circulators, per se known, in a way which is known and thus herein not illustrated in details. The commutator **21** can be implemented, for instance, by means of an optical switch which ends up at the emitters **19** and **20** at one end, and at the first optical fiber line **8** at the other end, or otherwise, as illustrated in simplified form in figure 3, as a device which alternatively switch on the emitter **19** or the emitter **20.** In this embodiment, both the emitters **19** and **20** are always optically connected to the first optical fiber line **8,** and the commutator **21** only acts on the electric control of the emitters **19** and **20** by enabling always just one emitter **19** or **20** at a time, whereas the other emitter **20** or **19** remains switched off.

In other words, by virtue of the action of the commutator **21** the radiation source **4** alternatively emits two different radiation beams having differentiated emissive bands - or bands -, as depending on the thickness of the object **2** to be checked. The first band of the first radiation beam emitted by the emitter **19** has a first central value which is greater than a second central value of the second band of the second radiation beam emitted by the emitter **20.** The two emissive bands and their respective central values are purposefully chosen so as to result in the size enhancement of the continuous interval of wave numbers made available into the first optical fiber line **8** by virtue of a combination strategy herein described.

The commutator **21** enables the first emitter **19** when the thickness of the object **2** is greater than a predetermined threshold, and it enables the second emitter **20** when the thickness of the object **2** is smaller than the predetermined threshold. In such a way, the first radiation beam having the first band with the greatest first central value is used when the thickness of the object **2** is greater than the predetermined threshold; while the second radiation beam having the second band with the smallest second central value is used when the thickness of the object **2** is smaller than the predetermined threshold.

As an example, when the slice **2** of semiconductor material is made of silicon the first central value of the first band is within 1200 nm and 1400 nm, and the second central value of the second band is within 700 nm and 900 nm; moreover, in this case, the predetermined threshold is within 5 micron and 10 micron.

On the basis of theoretical considerations and experimental tests, it has been noted that by decreasing the central value of the wavelength band of the beam of the radiations **I** which is directed onto the slice **2** of semiconductor material (that is, by reducing the wavelength of the radiations **I** and consequently increasing the size of the continuous interval of wave numbers made available in the radiations **I**) it is possible to considerably decrease the limit defined by the smallest measurable thickness. It is to be noted that the wavelength reduction of the radiations **I** cannot exceed the constraints consequent to certain physical relations among the reflectance and the absorbance of the slice **2** of semiconductor material and the radiation wavelength, since by reducing the wavelength the transparency in the semiconductor material is reduced, too, and the resulting loss of radiation energy makes it more difficult to perform a proper measurement.

The present invention takes advantage of the fact that a semiconductor material is completely or almost completely opaque to radiations having wavelengths that are smaller than a certain lowest value. By decreasing the wavelength the portion of radiation entering the material decreases, and the thickness which the radiation can pass through also decreases, owing to the absorption phenomenon of the material.

However, when the thickness of the silicon slice is smaller than about 10 microns, the absorption contribution to the radiation energy loss lessens, making the silicon slice itself sufficiently transparent to (i.e. which can be passed through by) radiations having smaller wavelengths, even in the visible red, and beyond.

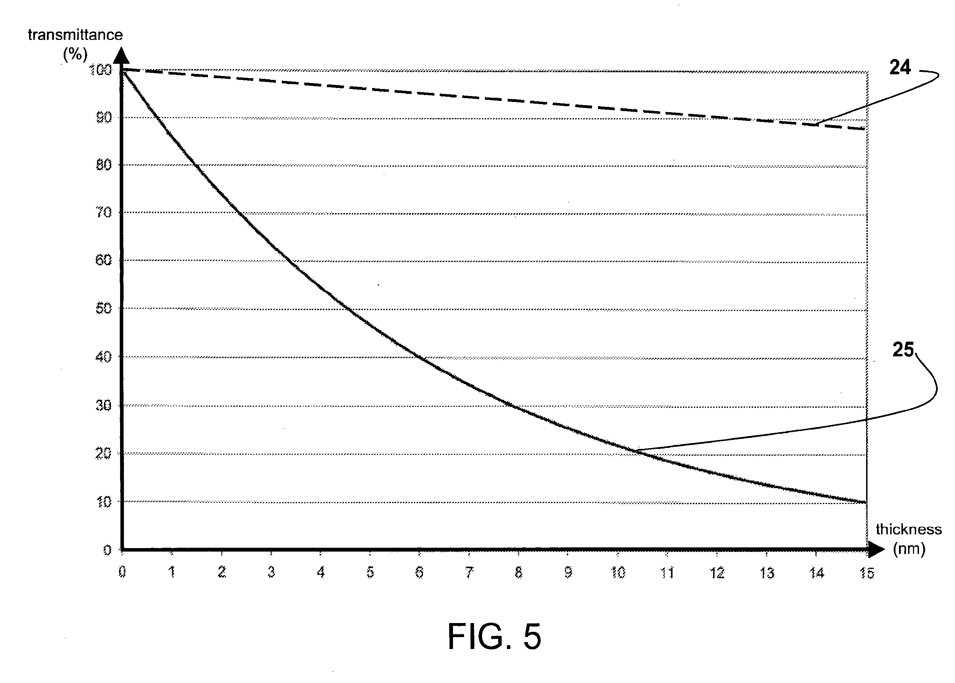

In connection with the above, the graph of figure 5 shows how the transmittance of radiations within the silicon slide varies - more specifically decreases - when the thickness of the latter increases. In figure 5, broken line **24** refers to a relatively longer wavelength (e.g. 1200 nm), while unbroken line **25** to a shorter wavelength (e.g. 826 nm). It is possible to note that the absorption phenomenon is negligible for long wavelengths and increases when the radiation wavelength decreases. However, as already stated above, when the thickness is small the slice is sufficiently transparent even to relatively short wavelengths radiations.

According to an additional feature of the present invention, the power of the second emitter **20** can be controlled, so that, in order to avoid that the radiation energy loss due to the absorption may jeopardize the achievement of proper results, such power be increased.

When the thickness of the slice **2** of semiconductor material is greater than the predetermined threshold the first emitter **19** emitting the first radiation beam having longer wavelengths is used.

When the thickness of the slice **2** of semiconductor material is smaller than the predetermined threshold, the emitter **20** emitting the second radiation beam having shorter wavelengths is used. The employ of the second radiation beam having shorter wavelengths (which is possible only when the thickness of the slice **2** of semiconductor material is small) enables to measure thickness values of the slice **2** of semiconductor material that are much smaller than the values measurable when the first radiation beam having longer wavelengths is used.

The commutator **21** can be manually controlled by an operator who sends control signals to the commutator **21,** for example by means of a keyboard, depending on whether the expected thickness of the slice **2** of semiconductor material is greater or smaller than the predetermined threshold, and thus who controls the commutator **21** to activate the emitter **19** or the emitter **20.** As an alternative, the commutator **21** can be automatically controlled by the processing unit **18.** In this case, the commutator **21** may be empirically controlled: the processing unit **18** causes the emitter **19** be enabled and checks if a reliable estimation of the thickness of the slice **2** of semiconductor material can be performed. In the affirmative and in case that the estimated thickness of the slice **2** of semiconductor material is greater than the predetermined threshold, the enabling of the emitter **19** is proper; whereas in the negative and/or in case that the estimated thickness of the slice **2** of semiconductor material is smaller (or even close to) the predetermined threshold, the processing unit **18** causes the emitter **20** be enabled (and the emitter **19** be disabled) and checks if a reliable estimation of the thickness of the slice **2** of semiconductor material can be performed. In the event two reliable estimations of the thickness of the slice **2** of semiconductor material can be performed by subsequently using the beams of both the emitters **19** and **20** (typically when the thickness of the slice **2** of semiconductor material is in a range around the predetermined threshold), the measured thickness of the slice **2** of semiconductor material is assumed as equal to one of the two evaluations, or it is assumed as equal to an average (in case a weighted average) between the two estimations.

As an example, in the embodiment shown in figure 3 the radiation source **4** includes two emitters **19** and **20;** obviously there can be more than two emitters (typically not more than three or at the most four emitters).

For example, in the case of three emitters two threshold values are predetermined: when the thickness of the slice **2** of semiconductor material is greater than a first predetermined threshold a first emitter emitting a first radiation beam with a first band characterized with longer wavelengths is activated; when the thickness of the slice **2** of semiconductor material is within the two predetermined thresholds a second emitter emitting a second radiation beam with a second band characterized with intermediate wavelengths is activated; and when the thickness of the slice **2** of semiconductor material is smaller than a second predetermined threshold a third emitter emitting a third radiation beam with a third band characterized with shorter wavelengths is activated.

Preferably, each emitter **19** or **20** is formed by a SLED (Superluminescent Light Emitting Diode).

According to the embodiment shown in figure 3, there can be used a single apparatus **1** including the spectrometer **5,** the optical probe **6,** and the radiation source **4** which comprises in turn the two emitters **19** and **20** and the commutator **21** that alternatively activates the emitter **19** or the emitter **20** as depending on the thickness of the slice **2** of semiconductor material.

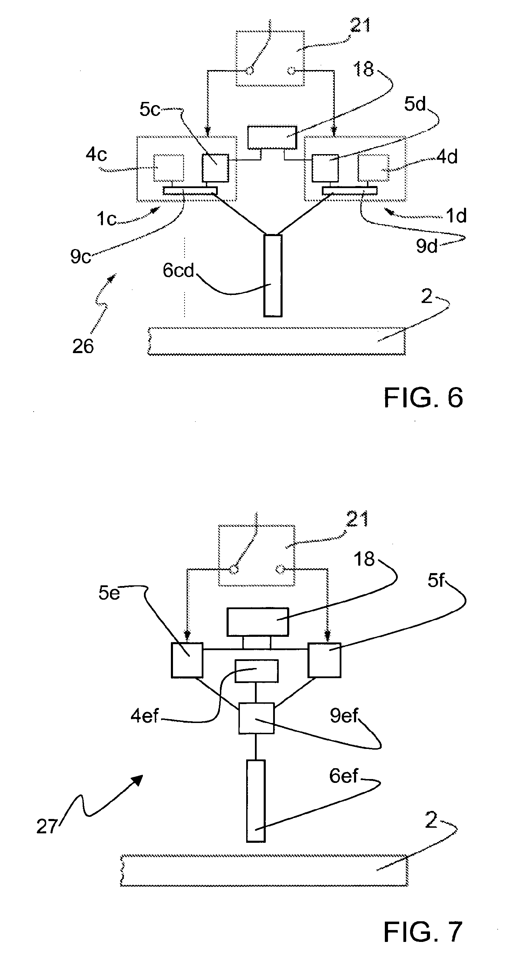

According to a different embodiment illustrated in figure 4, there is a measuring arrangement or station **23** which includes two separated apparatuses indicated in figure 4 with the reference numbers **1a** and **1b,** each apparatus comprising its own spectrometer **5a** (and **5b**), optical probe **6a** (and **6b**), optical coupler **9a** (and **9b**) and radiation source **4a** (and **4b**), and a commutator **21** which alternatively enables the apparatus **1a** or the apparatus **1b** as depending on the thickness of the object **2.** Both spectrometers **5a** and **5b** are connected to the same processing unit **18** for determining the thickness of the slice **2** on the basis of the received spectrum. In this embodiment, the radiation source **4a** of the apparatus **1a** emits the first radiation beam composed of a number of wavelengths within the first band; while the radiation source **4b** of the apparatus **1b** emits the second radiation beam composed of a number of wavelengths within the second band differing from the first band. In the embodiment illustrated in figure 4, the two apparatuses **1** can even be always switched on (in this case the commutator **21** is omitted). Generally (that is, when the thickness of the slice **2** of semiconductor material is far from the predetermined threshold) just one of the two apparatuses **1a** and **1b** provides the processing unit **18** with a spectral information giving a reliable estimation of the thickness of the slice **2** of semiconductor material; whereas in particular cases (which means when the thickness of the slice **2** of semiconductor material is in a range around the predetermined threshold) both the apparatuses **1a** and **1b** provide the processing unit **18** with a spectral information giving a reliable estimation of the thickness of the slice **2** of semiconductor material. As previously disclosed, in this situation the measured thickness of the slice **2** of semiconductor material is assumed as equal to one of the two estimations, or it is assumed as equal to an average (in case a weighted average) between the two estimations. Figure 6 shows a different measuring arrangement **26** according to the present invention. The measuring arrangement **26** is substantially similar to the station **23** of figure 4, but it includes two separate assemblies indicated with numbers **1c** and **1d** and a single optical probe **6cd,** instead of two fully separate apparatuses. Spectrometers **5a, 5b,** optical couplers **9c, 9d** and radiation sources **4c, 4d** are shown in figure 6 for each assembly **1c, 1d.** The operation of the measuring arrangement **26** is similar to the one of station **23,** and commutator **21** alternatively enables the assembly **1c** or the assembly **1d** as depending on the thickness of the object **2.** Radiation sources **4c** and **4d** are able to emit first and second radiation beams with wavelengths within two different bands, e.g. the above mentioned first band with the first central value and the above mentioned second band with the second central value smaller than the first central value, respectively. First spectrometer **5c** and second (or additional) spectrometer **5d** are different from each other, including e.g different diffractor gratings and radiation detectors having each the proper features for operating with radiations having wavelength in said first and, respectively, second band.

Another measuring arrangement **27** according to the present invention is shown in figure 7. The measuring arrangement **27** substantially includes an apparatus with a radiation source **4ef,** an optical coupler **9ef,** an optical probe **6ef,** a first spectrometer **5e** and a second or supplemental spectrometer **5f.** The spectrometers **5e** and **5f** are substantially similar to spectrometers **5c** and, respectively, **5d** of measuring arrangement **26** (figure 6), i.e. each of them has the proper features for operating with radiations having wavelength in a first band or, respectively, separate second band, wherein the first central value of the first band is greater than the second central value of the second band. The radiation source **4ef** emits radiations in a wide range of wavelengths, including the wavelengths of both the above mentioned first and second bands, and can include a single emitter, for example a halogen lamp or, preferably, a supercontinuum laser source, e.g. with a wavelength range between about 750 nm and over 1500 nm. The radiations generated by source **4ef** are sent to optical probe **6ef,** and the result of the interference (that takes place as explained above in connection with figures 1 and 2) is conveyed back by probe **6ef** to the spectrometers **5e** and **5f,** through the optical coupler **9ef.** Depending on the nominal thickness of the object **2,** e.g. whether such nominal thickness is greater or smaller than a predetermined threshold, the commutator **21** alternatively activates spectrometer **5e** or **5f** having the proper features. Similarly to what happens for the arrangements **23** and **26** of figures 4 and 6, the spectrometers **5e** and **5f** are coupled to the processing unit **18** for determining the thickness of the slice **2** on the basis of the received spectrum.

In a slightly different embodiment, the commutator **21** (e.g. an optical switch) can be placed at the output of the optical coupler **9ef,** to convey the result of the interference alternatively to the spectrometer **5e** or to the spectrometer **5f,** depending on whether the nominal thickness of the object **2** is greater or smaller than the predetermined threshold.

The example shown in figure 2 refers to the particular case of a single slice **2** of semiconductor material placed on a support layer **3.** However, applications of a method, a measuring arrangement and an apparatus according to the present invention are not limited to the dimensional checking of pieces of this type. In fact, such methods and measuring arrangements can also be employed, for example, for measuring the thickness of one or more slices **2** of semiconductor material and/or of layers made of other materials located inside a per se known multilayer structure. Within the multilayer structure, the thickness of single slices **2** or layer can be measured, as well as the thickness of groups of adjacent slices **2** or layers.

The above described measuring arrangements **1, 23, 26** and **27** have many advantages since they can be easily and cheaply implemented, and especially they enable to measure thickness values that are definitely smaller than the ones measured by similar known apparatuses and measuring arrangements.

Moreover, the method and measuring arrangements according to the invention are particularly adapted to carry out checking and measuring operations in the workshop environment before, during or after a mechanical machining phase of an object **2** such as a slice of silicon material.

## Claims

1. Method for optically measuring by interferometry the thickness of an object featuring an external surface and an internal surface opposite with respect to the external surface; the method includes the steps of:
emitting a low coherence beam of radiations composed of a number of wavelengths within a determined band by means of at least one radiation source;
directing the beam of radiations onto the external surface of the object by means of at least one optical probe;
collecting the radiations that are reflected by the object by means of said at least one optical probe;
analyzing by means of at least one spectrometer the spectrum of the result of the interference between radiations that are reflected by the external surface without entering the object and radiations that are reflected by the internal surface entering the object; and
determining the thickness of the object as a function of the spectrum provided by said at least one spectrometer;
the method is **characterized by** the fact that at least two different beams of radiations belonging to differentiated bands are employed, and at least two spectrometers are employed, to analyze the spectrum of said result of the interference for radiations having differentiated wavelengths substantially belonging to said differentiated bands.

2. Method according to claim 1 where at least two beams of radiations are employed, including the further phases of:
employing a first beam of radiations composed of a number of wavelengths within a first band having a first central value when the thickness of the object is greater than a predetermined threshold; and
employing a second beam of radiations composed of a number of wavelengths within a second band having a second central value which is smaller than the first central value of the first band when the thickness of the object is smaller than the predetermined threshold.

3. Method according to claim 2 where at least two beams of radiations are employed, including the further phase of employing both the beams of radiations when the thickness of the object is comprised in a range around the predetermined threshold.

4. Method according to claim 1 where at least two spectrometers are employed, including the further phases of:
employing one of said at least two spectrometers adapted to analyze the spectrum of radiations belonging to a first band having a first central value when the thickness of the object is greater than a predetermined threshold; and
employing the other of said at least two spectrometers adapted to analyze the spectrum of radiations belonging to a second band having a second central value which is smaller than said first central value when the thickness of the object is smaller than the predetermined threshold.

5. Method according to any one of claims from 2 to 4, wherein the central value of the first band is comprised between 1200 nm and 1400 nm and the central value of the second band is comprised between 700 nm and 900 nm.

6. Method according to any one of claims from 2 to 5, wherein the predetermined threshold is comprised between 5 microns and 10 microns.

7. Method according to any one of claims from 1 to 6, where the object is checked while undergoing a mechanical machining phase, wherein one or the other of the two different beams of radiations or of the two spectrometers is employed as depending on the thickness of the object.

8. Method according to claim 1 where at least two spectrometers are employed, wherein a measuring arrangement including a single radiation source is employed.

9. Method according to any one of claims 1 to 7, employing two distinct and independent apparatuses, each of which comprises a spectrometer, an optical probe, and a radiation source.

10. Method according to any one of claims 1 to 9, wherein the object is a slice of semiconductor material.

11. Method according to claim 10, wherein the object is a silicon slice.

12. Method according to any one of claims 1 to 11, wherein the beam of radiations is substantially perpendicularly directed onto the external surface of the object.

13. Measuring arrangement **(23;26;27)** for optically measuring by interferometry the thickness of an object **(2)** featuring an external surface **(16)** and an internal surface **(17)** opposite with respect to the external surface **(16);** the measuring arrangement **(23,26,27)** comprises:
at least one radiation source (**4a**,**4b;4c**,**4d;4ef**) emitting a low coherence beam of radiations **(I)** composed of a number of wavelengths within a determined band;
a spectrometer (**5a;5c;5e**) analyzing the spectrum of the result of the interference between radiations (**R1**) that are reflected by the external surface **(16)** without entering the object **(2)** and radiations **(R2)** that are reflected by the internal surface **(17)** entering the object **(2);**
at least one optical probe (**6a**,**6b;6cd;6ef**) which is connected by means of optical fiber lines **(8, 10, 11)** to said at least one radiation source (**4a**,**4b;4c**,**4d;4ef**) and to the spectrometer **(5a;5c;5e),** and is arranged in front of the object **(2)** to be measured for directing the beam of radiations **(I)** emitted by said at least one radiation source (**4a**,**4b;4c**,**4d;4ef**) onto the external surface **(16)** of the object **(2)** and for collecting the radiations **(R)** that are reflected by the object (**2**) **;** and
a processing unit **(18)** that calculates the thickness of the object **(2)** as a function of the spectrum provided by the spectrometer (**5a;5c;5e**)**;**
the measuring arrangement **(23,26,27)** is **characterized by** an additional spectrometer **(5b;5d;5f)** coupled to said at least one optical probe (**6a**,**6b;6cd;6ef**),
said spectrometer (**5a;5c;5e**) being adapted to analyze the spectrum of the result of the interference between reflected radiations composed of a number of wavelengths within a first band and having a first central value, and
said additional spectrometer **(5b;5d;5f)** being adapted to analyze the spectrum of the result of the interference between reflected radiations composed of a number of wavelengths within a second band and having a second central value.

14. Measuring arrangement **(23;26;27)** according to claim 13 and including a commutator **(21)** which activates said spectrometer (**5a;5c;5e**) when the thickness of the object **(2)** is greater than a predetermined threshold, and activates said additional spectrometer **(5b;5d;5f)** when the thickness of the object **(2)** is smaller than a predetermined threshold.

15. Measuring arrangement **(23;26)** according to claim 13 or claim 14, wherein said at least one radiation source includes:
a first radiation source (**4a;4c**) adapted to emit a beam of radiations composed of a number of wavelengths within the first band; and
a second radiation source **(4b;4d)** adapted to emit a beam of radiations composed of a number of wavelengths within the second band, said second band being different from the first band and said second central value being smaller than the first central value of the first band.

16. Measuring arrangement **(27)** according to claim 13 or claim 14, wherein said at least one radiation source includes a single radiation source **(4ef)** adapted to emit a beam of radiations in a range of wavelengths including the wavelengths of said first and second bands.

17. Measuring arrangement **(23)** according to any one of claims from 13 to 15, with at least two measuring apparatuses (1**a**,1**b**), each of which comprising one radiation source (**4a**,**4b**) and one of said spectrometer (**5a**) and additional spectrometer **(5b).**

18. Apparatus **(1)** for optically measuring by interferometry the thickness of an object **(2)** featuring an external surface **(16)** and an internal surface **(17)** opposite with respect to the external surface **(16);** the apparatus **(1)** includes:
a radiation source **(4)** emitting a low coherence beam of radiations **(I)** composed of a number of wavelengths within a determined band;
at least one spectrometer **(5)** analyzing the spectrum of the result of the interference between radiations **(R1)** that are reflected by the external surface **(16)** without entering the object **(2)** and radiations **(R2)** that are reflected by the internal surface **(17)** entering the object **(2);**
an optical probe **(6)** which is connected by means of optical fiber lines **(8, 10, 11)** to the radiation source **(4)** and to said at least one spectrometer **(5)**, and is arranged in front of the object **(2)** to be measured for directing the beam of radiations **(I)** emitted by the radiation source **(4)** onto the external surface **(16)** of the object **(2)** and for collecting the radiations **(R)** that are reflected by the object **(2);** and
a processing unit **(18)** that evaluates the thickness of the object **(2)** as a function of the spectrum provided by the at least one spectrometer **(5)**;
the apparatus **(1)** is **characterized by** the fact that the radiation source **(4)** includes:
a first emitter **(19)** which emits a low coherence beam of radiations composed of a number of wavelengths within a first band having a first central value;
at least a second emitter **(20)** which emits a low coherence beam of radiations composed of a number of wavelengths within a second band differing from the first band and having a second central value that is smaller than the first central value of the first band; and
a commutator **(21)** which alternatively enables to employ the first emitter **(19)** or the second emitter **(20)** as depending on the thickness of the object **(2)**.

## Patentansprüche

1. Verfahren zum optischen Messen mittels Interferometrie der Dicke eines Gegenstands mit einer äußeren Oberfläche und einer bezüglich der äußeren Oberfläche gegenüberliegenden inneren Oberfläche; das Verfahren schließt folgende Schritte ein:
Abstrahlen eines niedrig-kohärenten Bündels von Strahlen, bestehend aus einer Anzahl von Wellenlängen innerhalb eines bestimmten Bands, mittels zumindest einer Strahlenquelle;
Richten des Bündels von Strahlen auf die äußere Oberfläche des Gegenstands mittels zumindest einer optischen Sonde;
Erfassen der Strahlen, die von dem Gegenstand reflektiert werden, mittels der zumindest einen optischen Sonde;
Analysieren mittels zumindest einem Spektrometer des Spektrums des Ergebnisses der Interferenz zwischen Strahlen, die von der äußeren Oberfläche reflektiert werden, ohne in den Gegenstand einzudringen, und Strahlen, die von der inneren Oberfläche reflektiert werden und in den Gegenstand eindringen; und
Bestimmen der Dicke des Gegenstands als eine Funktion des von dem zumindest einen Spektrometer bereitgestellten Spektrums;
das Verfahren ist **dadurch gekennzeichnet, dass** mindestens zwei verschiedene Bündel von Strahlen eingesetzt werden, die zu unterschiedlichen Bändern gehören, und zumindest zwei Spektrometer verwendet werden, um das Spektrum des Ergebnisses der Interferenz für Strahlen zu analysieren, die unterschiedliche Wellenlängen aufweisen, die im Wesentlichen zu den unterschiedlichen Bändern gehören.

2. Verfahren nach Anspruch 1, in dem zumindest zwei Bündel von Strahlen eingesetzt werden, einschließlich der folgenden weiteren Phasen:
Einsetzen eines ersten Bündels von Strahlen, bestehend aus einer Anzahl von Wellenlängen innerhalb eines ersten Bands mit einem ersten mittleren Wert, wenn die Dicke des Gegenstands größer als ein vorbestimmter Schwellenwert ist; und
Einsetzen eines zweiten Bündels von Strahlen, bestehend aus einer Anzahl von Wellenlängen innerhalb eines zweiten Bands mit einem zweiten mittleren Wert, der kleiner als der erste mittlere Wert des ersten Bands ist, wenn die Dicke des Gegenstands kleiner als der vorbestimmte Schwellenwert ist.

3. Verfahren nach Anspruch 2, in dem zumindest zwei Bündel von Strahlen eingesetzt werden, einschließlich der weiteren Phase des Einsetzens beider Bündel von Strahlen, wenn die Dicke des Gegenstands in einem Bereich um den vorgegebenen Schwellenwert liegt.

4. Verfahren nach Anspruch 1, in dem zumindest zwei Spektrometer eingesetzt werden, einschließlich der folgenden weiteren Phasen:
Einsetzen eines der zumindest zwei Spektrometer, die zur Analyse des Spektrums der Strahlen geeignet sind, das zu einem ersten Band mit einem ersten mittleren Wert gehört, wenn die Dicke des Gegenstands größer als ein vorbestimmter Schwellenwert ist; und
Einsetzen des anderen der zumindest zwei Spektrometer, die zur Analyse des Spektrums der Strahlen geeignet sind, das zu einem zweiten Band mit einem zweiten mittleren Wert gehört, der kleiner als der erste mittlere Wert ist, wenn die Dicke des Gegenstands kleiner als der vorbestimmte Schwellenwert ist.

5. Verfahren nach einem der Ansprüche 2 bis 4, wobei der mittlere Wert des ersten Bands zwischen 1200 nm und 1400 nm und der mittlere Wert des zweiten Bands zwischen 700 nm und 900 nm liegt.

6. Verfahren nach einem der Ansprüche 2 bis 5, wobei der vorgegebene Schwellenwert zwischen 5 Mikrometer und 10 Mikrometer liegt.

7. Verfahren nach einem der Ansprüche 1 bis 6, in dem der Gegenstand überprüft wird, während er einer mechanischen Bearbeitungsphase unterzogen wird, wobei das eine oder das andere der beiden verschiedenen Bündel von Strahlen oder der beiden Spektrometer in Abhängigkeit von der Dicke des Gegenstands eingesetzt wird.

8. Verfahren nach Anspruch 1, in dem mindestens zwei Spektrometer eingesetzt werden, wobei eine Messanordnung, die eine einzelne Strahlenquelle einschließt, eingesetzt wird.

9. Verfahren nach einem der Ansprüche 1 bis 7, das zwei unterschiedlichen und unabhängigen Vorrichtungen einsetzt, von denen jede ein Spektrometer, eine optische Sonde und eine Strahlenquelle umfasst.

10. Verfahren nach einem der Ansprüche 1 bis 9, wobei der Gegenstand eine Scheibe aus Halbleitermaterial ist.

11. Verfahren nach Anspruch 10, wobei der Gegenstand eine Siliziumscheibe ist.

12. Verfahren nach einem der Ansprüche 1 bis 11, wobei das Bündel von Strahlen im Wesentlichen senkrecht auf die äußere Oberfläche des Gegenstands gerichtet ist.

13. Messanordnung **(23; 26; 27)** zum optischen Messen mittels Interferometrie der Dicke eines Gegenstands **(2)** mit einer äußeren Oberfläche **(16)** und einer bezüglich der äußeren Oberfläche **(16)** gegenüberliegenden inneren Oberfläche **(17);** die Messanordnung **(23, 26, 27)** umfasst:
mindestens eine Strahlenquelle (**4a**, **4b; 4c, 4d; 4ef**), die ein niedrig-kohärentes Bündel von Strahlen **(I)** abstrahlt, bestehend aus einer Anzahl von Wellenlängen innerhalb eines bestimmten Bands;
ein Spektrometer (**5a; 5c; 5e**), das das Spektrum des Ergebnisses der Interferenz zwischen Strahlen (**R1**), die von der äußeren Oberfläche **(16)** reflektiert werden, ohne in den Gegenstand **(2)** einzudringen, und Strahlen **(R2),** die von der inneren Oberfläche **(17)** reflektiert werden und in den Gegenstand **(2)** eindringen, analysiert;
mindestens eine optische Sonde (**6a**, **6b; 6cd; 6ef),** die mittels Lichtwellenleiter (**8**,**10**,**11**) mit der mindestens einen Strahlenquelle (**4a**, **4b; 4c, 4d; 4ef**) und dem Spektrometer (**5a; 5c; 5e**) verbunden ist, und vor dem zu messenden Gegenstand **(2)** angeordnet ist, um das Bündel von Strahlen **(I),** das von der mindestens einen Strahlenquelle (**4a**, **4b; 4c, 4d; 4ef**) abgestrahlt wird, auf die äußere Oberfläche **(16)** des Gegenstands **(2)** zu richten und um die Strahlen **(R)** zu erfassen, die von dem Gegenstand **(2)** reflektiert werden; und
eine Verarbeitungseinheit **(18),** die die Dicke des Gegenstands **(2)** als eine Funktion des vom Spektrometer (**5a; 5c; 5e**) bereitgestellten Spektrums berechnet;
die Messanordnung **(23, 26, 27)** ist durch ein zusätzliches Spektrometer (**5b; 5d; 5f**) gekennzeichnet, das mit der mindestens einen optischen Sonde (**6a**, **6b; 6cd; 6ef**) gekoppelt ist,
wobei das Spektrometer (**5a; 5c; 5e**) zur Analyse des Spektrums des Ergebnisses der Interferenz zwischen reflektierten Strahlen, bestehend aus einer Anzahl von Wellenlängen innerhalb eines ersten Bands mit einem ersten mittleren Wert, geeignet ist, und
wobei das zusätzliche Spektrometer (**5b; 5d; 5f**) zur Analyse des Spektrums des Ergebnisses der Interferenz zwischen reflektierten Strahlen, bestehend aus einer Anzahl von Wellenlängen innerhalb eines zweiten Bands mit einem zweiten mittleren Wert, geeignet ist.

14. Messanordnung **(23; 26; 27)** nach Anspruch 13 und einschließlich eines Kommutators **(21),** der das Spektrometer (**5a; 5c; 5e**) aktiviert, wenn die Dicke des Gegenstands **(2)** größer als ein vorbestimmter Schwellenwert ist, und das zusätzliche Spektrometer (**5b; 5d; 5f**) aktiviert, wenn die Dicke des Gegenstands **(2)** kleiner als ein vorbestimmter Schwellenwert ist.

15. Messanordnung **(23; 26)** nach Anspruch 13 oder Anspruch 14, wobei die mindestens eine Strahlenquelle Folgendes einschließt:
eine erste Strahlenquelle (**4a; 4c),** die zum Abstrahlen eines Bündels von Strahlen, bestehend aus einer Anzahl von Wellenlängen innerhalb des ersten Bands, geeignet ist; und
eine zweite Strahlenquelle **(4b; 4d),** die zum Abstrahlen eines Bündels von Strahlen, bestehend aus einer Anzahl von Wellenlängen innerhalb des zweiten Bands, geeignet ist, wobei sich das zweite Band von dem ersten Band unterscheidet und der zweite mittlere Wert kleiner als der erste mittlere Wert des ersten Bands ist.

16. Messanordnung **(27)** nach Anspruch 13 oder Anspruch 14, wobei die mindestens eine Strahlenquelle eine einzelne Strahlenquelle (**4ef**) einschließt, die zum Abstrahlen eines Bündels von Strahlen in einem Bereich von Wellenlängen einschließlich der Wellenlängen des ersten und zweiten Bands geeignet ist.

17. Messanordnung **(23)** nach einem der Ansprüche 13 bis 15, mit mindestens zwei Messvorrichtungen (**1a**, **1b**), die jeweils eine Strahlenquelle (**4a**, **4b)** und einen des Spektrometers (**5a**) oder des zusätzlichen Spektrometers (**5b**) umfasst.

18. Vorrichtung **(1)** zum optischen Messen mittels Interferometrie der Dicke eines Gegenstands **(2)** mit einer äußeren Oberfläche **(16)** und einer bezüglich der äußeren Oberfläche **(16)** gegenüberliegenden inneren Oberfläche **(17);** die Vorrichtung **(1)** beinhaltet:
eine Strahlenquelle **(4),** die ein niedrig-kohärentes Bündel von Strahlen **(I)** abstrahlt, bestehend aus einer Anzahl von Wellenlängen innerhalb eines bestimmten Bands;
mindestens ein Spektrometer **(5),** das das Spektrum des Ergebnisses der Interferenz zwischen Strahlen **(R1),** die von der äußeren Oberfläche **(16)** reflektiert werden, ohne in den Gegenstand **(2)** einzudringen, und Strahlen **(R2)** analysiert, die von der inneren Oberfläche **(17)** reflektiert werden und in den Gegenstand **(2)** eindringen;
eine optische Sonde **(6),** die mittels Lichtwellenleiter **(8, 10, 11)** mit der Strahlenquelle **(4)** und dem mindestens einen Spektrometer **(5)** verbunden ist, und vor dem zu messenden Gegenstand **(2)** angeordnet ist, um das Bündel von Strahlen **(I),** das von der Strahlenquelle **(4)** abgestrahlt wird, auf die äußere Oberfläche **(16)** des Gegenstands **(2)** zu richten und um die Strahlen **(R)** zu erfassen, die von dem Gegenstand **(2)** reflektiert werden; und
eine Verarbeitungseinheit **(18),** die die Dicke des Gegenstands **(2)** als eine Funktion des von dem mindestens einen Spektrometer **(5)** bereitgestellten Spektrums bewertet;
die Vorrichtung **(1)** ist **dadurch gekennzeichnet, dass** die Strahlenquelle **(4)** Folgendes einschließt:
einen ersten Strahler **(19),** der ein niedrig-kohärentes Bündel von Strahlen abstrahlt, bestehend aus einer Anzahl von Wellenlängen innerhalb eines bestimmten Bands mit einem ersten mittleren Wert;
mindestens einen zweiten Strahler **(20),** der ein niedrig-kohärentes Bündel von Strahlen abstrahlt, bestehend aus einer Anzahl von Wellenlängen innerhalb eines zweiten Bands, das sich von dem ersten Band unterscheidet und einen zweiten mittleren Wert aufweist, der kleiner als der erste mittlere Wert des ersten Bands ist; und
einen Kommutator **(21),** der es wahlweise ermöglicht, in Abhängigkeit von der Dicke des Gegenstandes **(2)** den ersten Strahler **(19)** oder den zweiten Strahler **(20)** einzusetzen.

## Revendications

1. Méthode de mesure optique par interférométrie de l'épaisseur d'un objet ayant une surface externe et une surface interne opposée par rapport à la surface externe; la méthode incluant les étapes de:
émission d'un faisceau à faible cohérence de radiations composé d'un certain nombre de longueurs d'onde dans une bande déterminée au moyen d'une source de radiations;
orientation du faisceau de radiation sur la surface externe de l'objet au moyen d'au moins une sonde optique;
collecte des radiations qui sont réfléchies par l'objet au moyen d'au moins une sonde optique;
analyse au moyen d'au moins un spectromètre du spectre du résultat de l'interférence entre les radiations qui sont réfléchies par la surface externe sans pénétrer l'objet et les radiations qui sont réfléchies par la surface interne en pénétrant l'objet; et
détermination de l'épaisseur de l'objet en fonction du spectre fourni par ledit ou lesdits spectromètres;
la méthode est **caractérisée par le fait qu'**au moins deux faisceaux de radiations différents appartenant à des bandes de fréquences différentiées sont employés, et au moins deux spectromètres sont employés pour analyser le spectre dudit résultat de l'interférence pour des radiations ayant des longueurs d'onde différentiées appartenant substantiellement auxdites bandes de fréquences différentiées.

2. Méthode selon la revendication 1 où au moins deux faisceaux de radiations sont employés, comprenant les étapes de:
emploi d'un premier faisceau de radiations composé d'un certain nombre de longueurs d'onde dans une première bande ayant une première valeur centrale quand l'épaisseur de l'objet est supérieure à un seuil prédéterminé; et
emploi d'un deuxième faisceau de radiations composé d'un certain nombre de longueurs d'onde dans une deuxième bande ayant une deuxième valeur centrale qui est inférieure à la première valeur centrale de la première bande quand l'épaisseur de l'objet est inférieure au seuil prédéterminé.

3. Méthode selon la revendication 2 où au moins deux faisceaux de radiations sont employés, incluant la phase supplémentaire d'emploi des deux faisceaux de radiations quand l'épaisseur de l'objet est comprise dans une gamme de valeurs autour du seuil prédéterminé.

4. Méthode selon la revendication 1 où au moins deux spectromètres sont employés, incluant les phases supplémentaires de:
emploi d'un desdits deux spectromètres adaptés à l'analyse du spectre de radiations appartenant à une première bande ayant une première valeur centrale quand l'épaisseur de l'objet est supérieure à un seuil prédéterminé; et
emploi de l'autre desdits deux spectromètres adaptés à l'analyse du spectre de radiations appartenant à une deuxième bande ayant une deuxième valeur centrale qui est inférieure à ladite première valeur centrale quand l'épaisseur de l'objet est inférieure au seuil prédéterminé.

5. Méthode selon l'une quelconque des revendications 2 à 4, où la valeur centrale de la première bande est comprise entre 1200 nm et 1400 nm et la valeur centrale de la deuxième bande est comprise entre 700 nm et 900 nm.

6. Méthode selon l'une quelconque des revendications 2 à 5, où le seuil prédéterminé est compris entre 5 µm et 10 µm.

7. Méthode selon l'une quelconque des revendications 1 à 6, où l'objet est contrôlé pendant qu'il subit une phase d'usinage mécanique, où l'un ou l'autre des deux différents faisceaux de radiations ou des deux spectromètres est employé en fonction l'épaisseur de l'objet.

8. Méthode selon la revendication 1 où au moins deux spectromètres sont employés, où un assemblage de mesure incluant une unique source de radiations est employé.

9. Méthode selon l'une quelconque des revendications 1 à 7 employant deux appareils distincts et indépendants, chacun comprenant un spectromètre, une sonde optique et une source de radiations.

10. Méthode selon l'une quelconque des revendications 1 à 9, où l'objet est une tranche de matériau semi-conducteur.

11. Méthode selon la revendication 10 où l'objet est une tranche de silicium.

12. Méthode selon l'une quelconque des revendications 1 à 11, où le faisceau de radiations est orienté substantiellement perpendiculairement sur la surface externe de l'objet.

13. Assemblage de mesure **(23, 26, 27)** pour la mesure optique par interférométrie de l'épaisseur d'un objet **(2)** comportant une surface externe **(16)** et une surface interne **(17)** opposée par rapport à la surface externe **(16);** le dispositif de mesure **(23, 26, 27)** comprend:
au moins une source de radiations (**4a**, **4b, 4c, 4d, 4ef)** émettant un faisceau de radiations de faible cohérence **(I)** composé d'un certain nombre de longueurs d'onde dans une bande déterminée;
un spectromètre (**5a**, **5c, 5e**) analysant le spectre du résultat de l'interférence entre les radiations (**R1**) qui sont réfléchies par la surface externe **(16)** sans pénétrer l'objet **(2)** et les radiations **(R2)** qui sont réfléchies par la surface interne **(17)** en pénétrant l'objet **(2);**
au moins une sonde optique (**6a**, **6b, 6cd, 6ef**) qui est connectée par des lignes de fibres optiques **(8, 10, 11) à** ladite au moins une source de radiations (**4a**, **4b, 4c, 4d, 4ef**) et au spectromètre (**5a**, **5c, 5e**) et est disposée devant l'objet **(2)** à mesurer pour orienter le faisceau de radiations **(I)** émis par ladite ou moins une source de radiations (**4a**, **4b, 4c, 4d, 4ef)** sur la surface externe **(16)** de l'objet **(2)** et pour collecter les radiations **(R)** qui sont réfléchies par l'objet **(2);** et
un processeur **(18)** qui calcule l'épaisseur de l'objet **(2)** en fonction du spectre fourni par le spectromètre (**5a**, **5c, 5e**)**;**
l'assemblage de mesure **(23, 26, 27)** est **caractérisé par** une spectromètre supplémentaire (**5b**, **5d, 5f**) couplé à ladite au moins une sonde optique (**6a**, **6b, 6cd, 6ef**),
ledit spectromètre (**5a**, **5c, 5e**) étant adapté pour analyser le spectre du résultat de l'interférence entre les radiations réfléchies composé d'un certain nombre de longueurs d'onde dans une première bande et ayant une première valeur centrale, et
ledit spectromètre supplémentaire (**5b**, **5d, 5f**) étant adapté pour analyser le spectre du résultat de l'interférence entre les radiations réfléchies composé d'un certain nombre de longueurs d'onde dans une deuxième bande et ayant une deuxième valeur centrale.

14. Assemblage de mesure **(23, 26, 27)** selon la revendication 13 incluant un commutateur **(21)** qui active ledit spectromètre (**5a**, **5c, 5e**) quand l'épaisseur de l'objet **(2)** est supérieure à un seuil prédéterminé et active le spectromètre supplémentaire (**5b**, **5d, 5f**) quand l'épaisseur de l'objet **(2)** est inférieure à un seuil prédéterminé.

15. Assemblage de mesure **(23, 26)** selon la revendication 13 ou 14 où ladite unique source de radiations inclut:
une première source de radiations (**4a**, **4c)** adaptée pour émettre un faisceau de radiations composé d'un certain nombre de longueurs d'onde dans une première bande, et
une deuxième source de radiations **(4b, 4d)** adaptée pour émettre un faisceau de radiations composé d'un certain nombre de longueurs d'onde dans une deuxième bande, ladite deuxième bande étant différente de la première bande, et ladite deuxième valeur centrale étant inférieure à la première valeur centrale de la première bande.

16. Assemblage de mesure **(27)** selon la revendication 13 ou 14, où ladite unique source de radiations inclut une unique source de radiations (**4ef**) adaptée pour émettre un faisceau de radiations dans une gamme de longueurs d'onde incluant les longueurs d'onde desdites premières et deuxièmes bandes de fréquence.

17. Assemblage de mesure **(23)** selon l'une quelconque des revendications 13 à 15 avec au moins deux appareils de mesure (1**a**, **1b**), chacun comprenant une source de radiations (**4a**, **4b),** et l'un parmi ledit spectromètre (**5a**) et ledit spectromètre supplémentaire (**5b**).

18. Appareil **(1)** de mesure optique par interférométrie de l'épaisseur d'un objet **(2)** ayant une surface externe **(16)** et une surface interne **(17)** opposée par rapport à la surface externe **(16),** l'appareil **(1)** incluant:
une source de radiations **(4)** émettant un faisceau à faible cohérence de radiations **(I)** composé d'un certain nombre de longueurs d'onde dans une bande déterminée;
au moins un spectromètre **(5)** analysant le spectre du résultat de l'interférence entre les radiations (**R1**) qui sont réfléchies par la surface externe **(16)** sans pénétrer l'objet **(2)** et les radiations **(R2)** qui sont réfléchies par la surface interne **(17)** en pénétrant l'objet **(2)**;
un processeur **(18)** qui calcule l'épaisseur de l'objet **(2)** en fonction du spectre fourni par le au moins un spectromètre **(5);**
l'appareil **(1)** est **caractérisé par le fait que** la source de radiations **(4)** inclut:
un premier émetteur **(19)** qui émet un faisceau à faible cohérence de radiations composé d'un certain nombre de longueurs d'onde dans une première bande ayant une première valeur centrale;
au moins un deuxième émetteur **(20)** qui émet un faisceau à faible cohérence de radiations composé d'un certain nombre de longueurs d'onde dans une deuxième bande différente de la première bande et ayant une deuxième valeur centrale inférieure à la première valeur centrale de la première bande; et
un commutateur **(21)** qui permet alternativement d'employer le premier émetteur **(19)** ou le deuxième émetteur **(20)** en fonction de l'épaisseur de l'objet **(2)**.
